# EUROPEAN PATENT SPECIFICATION

(11) **EP 0 636 108 B1**
(45) Date of publication and mention of the grant of the patent: **13.11.1996**
(21) Application number: 93911626.5
(22) Date of filing: 12.04.1993
(51) Int. Cl.: C01B 21/072, C04B 35/58, H01L 21/48

(54) **METHOD FOR AQUEOUS PROCESSING OF ALUMINUM NITRIDE AND COMPOSITIONS THEREFROM**
VERFAHREN ZUR WÄSSRIGEN BEHANDLUNG VON ALUMINIUMNITRID UND HERGESTELLTE ZUSAMMENSTELLUNGEN
PROCEDE DE TRAITEMENT AQUEUX DE NITRURE D'ALUMINIUM ET COMPOSITIONS TIREES DE CELUI-CI

(30) Priority: 16.04.1992 US 869601
(43) Date of publication of application: 01.02.1995
(73) Proprietor: THE DOW CHEMICAL COMPANY (a Delaware corporation), Midland Michigan 48640 (US)
(72) Inventor: HOWARD, Kevin, E., Midland, MI 48642 (US)
(74) Representative: Burford, Anthony Frederick
(86) International application number: PCT/US93/03395
(87) International publication number: WO 93/21108

(56) References cited:
- DE-A- 3 925 338
- JOURNAL OF MATERIALS SCIENCE LETTERS vol. 10, no. 1, September 1991, pages 994 - 996 , XP267878 M. EGASHIRA ET AL. 'Chemical surface treatments of aluminium nitride powder suppressing its reactivity with water.'
- CHEMICAL ABSTRACTS, vol. 113, no. 10, December 1990, Columbus, Ohio, US; abstract no. 214803q, J. ITO ET AL. 'Coating of aluminium nitride powder with polyamide for heat and water resistances.' page 154 ; see abstract & JP,A,02 069 306
- JOURNAL OF THE AMERICAN CERAMIC SOCIETY vol. 73, no. 3, March 1990, COLUMBUS US pages 724 - 728 P. BOWEN ET AL. 'Degradation of aluminum nitride powder in an aqueous environment.'

## Description

This invention relates generally to aqueous compositions containing aluminum nitride (AIN) powder and methods of processing AlN powder in water. More specifically, this invention relates to aqueous compositions containing AlN powder and combinations of buffering agents and methods of using such compositions.

Ceramic materials are used today in many applications that call for durable, tough, and heat-resistant materials. In making ceramic articles, a ceramic composite powder is often made by first wet mixing ceramic powder, such as AlN powder, with ceramic composite components, such as binders, lubricants, sintering aids, and other processing aids in a liquid medium.

Traditionally, when AlN powder is used as the ceramic powder, the wet mixing is performed using ethanol or some nonaqueous liquid as the liquid medium to aid in mixing. Water is generally not a suitable liquid medium for wet mixing with AlN powder because AlN is highly sensitive to hydrolysis. When AlN powder is hydrolyzed by water, undesirable aluminum hydroxides are formed on the powder, concomitant with an increased oxygen content.

Due to environmental concerns, water would be an ideal liquid medium for wet mixing AlN powder with the other components. If water were used as the liquid medium, no precautions would need to be taken to avoid exposure to the liquid medium during wet mixing operations. Additionally, containment of the liquid medium and precautions to avoid the dangers of flammable liquids during and after mixing would be unnecessary. Water also has the advantage of being relatively inexpensive and readily available.

DE-A-3925338 discloses a process for the improvement of the water resistance of aluminium nitride powder by suspending this powder in a non-aqueous solution of a phosphoric acid compound. As phosphoric acid compound, an inorganic compound like orthophosphoric acid can be used (page 2, lines 63-65). According to a comparative example the aluminium nitride powder is treated with acetic acid (Table 1, last example). In this document the use of a weak acid in combination with its conjugated base is not described.

One embodiment of the invention is an aqueous composition containing AlN powder that exhibits a reduced tendency for hydrolysis of the AlN contained therein. The aqueous composition comprises (a) a liquid medium containing water, (b) AlN powder, and (c) a combination of buffering agents that includes a weak acid and a conjugate base of the weak acid and controls pH of the water within a range of from ≥5.5 to ≤7.0, the combination of buffering agents being employed at a lower weight percent concentration than that of the aluminum nitride powder, the combination of buffering agents and the liquid medium forming a solution.

A second embodiment of the invention is a method of processing aluminum nitride powder in water in which the aluminum nitride exhibits a reduced tendency for hydrolysis. The method comprises forming an aqueous admixture or composition that includes (a) a liquid medium containing water, (b) aluminum nitride powder, and (c) a combination of buffering agents that includes a weak acid and a conjugate base of the weak acid and controls pH of the water within a range of from ≥5.5 to ≤7.0, the combination of buffering agents being employed at a lower weight percent concentration than that of the aluminum nitride powder, the combination of buffering agents and the liquid medium forming a solution.

The invention generally entails an aqueous composition or admixture containing AlN powder that exhibits a reduced tendency for hydrolysis of the AlN contained therein and a method used to prepare the aqueous composition. The aqueous composition comprises (a) a liquid medium containing water, (b) AlN powder, and (c) a combination of buffering agents that includes a weak acid and a conjugate base of the weak acid and controls pH of the water within a range of from ≥5.5 to ≤7.0. The combination of buffering agents is employed at a lower weight percent (wt-%) concentration than that of the AIN powder. The combination of buffering agents and the liquid medium form a solution.

Examples of liquid mediums that may be used in the aqueous compositions of this invention are water or combinations of water and an alkyl alcohol having from 1-3 carbon atoms, inclusive, such as methanol, ethanol, and isopropyl alcohol.

With respect to the AlN powder employed in the aqueous compositions of this invention, there are no known limitations of the properties of the powder. Although AlN powder may be employed at any level in the compositions of this invention, it is preferably present in an amount of no more than 60 wt-%, based upon composition weight. The amount is more preferably, between 10 and 30 wt-%.

To avoid having excessive undesirable compounds in the final AlN product, the combination of buffering agents is employed at a lower wt-% concentration than the AlN powder in aqueous compositions of this invention. Therefore, if the amount of AlN powder in an aqueous composition is no more than 60 wt-%, then the combination of buffering agents is present in an amount that is usually less than 30 wt-%. The amount of the combination of buffering agents is beneficially less than 5 wt-%, desirably less than 1 wt-%, based upon composition weight.

The combination of buffering agents employed in this invention controls the pH of water within a range of from ≥5.5 to ≤7.0. The pH is preferably ≥6 but ≤7. A "combination of buffering agents" is a combination of compounds that, when mixed in water in the proper proportion, causes the water mixture to resist changes in pH on dilution or addition of acid or alkali. The combination of buffering agents includes a weak acid and a conjugate base of the weak acid. The combination of buffering agents and the liquid medium form a solution. When a combination of buffering agents controls the pH of water at about 6 is employed in the compositions of this invention, the liquid medium, after being admixed with the AlN powder, usually has a pH of about 7. Therefore, using (a) a combination of buffering agents having a pH of about 6 and (b) water as the liquid medium provides for more manageable disposal of the liquid medium after use.

Typical ionic strengths of the combinations of buffering agents useful for this invention are from 0.01 to 6 mol/dm³, more typical ionic strengths being from 0.05 to 0.1 mol/dm³.

Combinations of buffering agents suitable for this invention include (i) a monobasic phosphate and a hydroxide selected from potassium hydroxide and sodium hydroxide, (ii) a monobasic phosphate and a dibasic phosphate, and (iii) an acetate and acetic acid.

More specifically, the monobasic phosphate may selected from monobasic potassium phosphate (KH₂PO₄), monobasic sodium phosphate (NaH₂PO₄), and monobasic ammonium phosphate (NH₄H₂PO₄). The dibasic phosphate may be selected from dibasic potassium phosphate (K₂HPO₄), dibasic sodium phosphate (Na₂HPO₄), and dibasic ammonium phosphate ((NH₄)₂HPO₄). The acetate may selected from potassium acetate, sodium acetate, and ammonium acetate.

The monobasic/dibasic ammonium phosphate combination is a preferred combination of buffering agents because it works well in compositions employing substantially water as the liquid medium and it does not add any undesirable alkali metals to the compositions.

As mentioned hereinabove, the liquid medium may contain an alkyl alcohol. The alkyl alcohol may be employed in any amount. However, when the acetate and acetic acid are employed as the combination of buffering agents, it is preferred that the liquid medium contain at least 50 volume percent alcohol.

When the combination of a monobasic phosphate and a hydroxide is used as the combination of buffering agents, concentrations of the monobasic phosphate and the hydroxide in the water portion of the liquid medium are, respectively, from 0.01 to 2 molarity (M) and from 0.01 to 1.0 M.

When the combination of a monobasic phosphate and a dibasic phosphate is used, concentrations of the monobasic phosphate and the dibasic phosphate in the water portion of the liquid medium are, respectively, from 0.01 to 2 M and from 0.003 to 0.7 M.

When combination of the acetate and the acetic acid is used, concentrations of the acetate and the acetic acid in the water portion of the liquid medium are, respectively, from 0.02 to 2.0 M and from 0.002 to 1.0 M.

When making the aqueous compositions of this invention, it is preferred to first dissolve the combination of buffering agents in the liquid medium and then add the AlN powder to the combination of buffering agents/liquid medium solution. To combine the AlN powder with the liquid medium before adding the buffering agents would cause some undesirable hydrolysis of the AlN powder.

The compositions of this invention may be used in many of the techniques used in ceramic processing, such as tape-casting, slip casting, and filter casting. The compositions may even be used in methods, such as ball milling, during which at least some comminution of the AlN powder occurs. Because new, reactive surfaces of AlN are formed during such comminution, ball milling is considered a severe test of the invention.

The aqueous compositions of this invention are also suitably used in methods that involve heating the compositions. The combination of buffering agents serves to protect the AlN powder even under reflux conditions where the liquid medium boils. As such, the compositions of this invention should readily undergo heating in operations such as spray drying without significant hydrolysis of the AlN powder.

The compositions of this invention may be blended with other components commonly used in ceramic processing, such as binders, dispersants, and sintering aids. After mixing, the compositions are desirably dried, optionally compacted, and sintered.

The method of this invention involves processing AlN powder in water such that the aluminum nitride exhibits a reduced tendency for hydrolysis. Basically, the method involves forming the aqueous compositions as admixtures of the above-described composition of the invention. The method desirably includes a mixing step that may result in comminution or pulverization of the AlN powder.

One means of measuring the effectiveness of this invention in reducing the hydrolysis of AlN powder in water is to measure the powder's oxygen content. It has been found that when the aqueous compositions of this invention are dried and the resulting AlN powder is heat-treated at a temperature of 550-600°C in a nitrogen atmosphere for one hour, the oxygen content of the heat-treated AlN powder is typically less than 3 wt-%, often less than 2 wt-%.

Thus, there are provided, in accordance with the present invention, aqueous compositions containing AlN in which the AlN powder exhibits a reduced tendency to hydrolyze. These compositions may even be comminuted, such as by ball milling, without adverse results.

The following examples are illustrative only and should not be construed as limiting the invention which is properly delineated in the appended claims.

In the following examples, the AlN powder had a surface area of about 2.9 m²/gm; 10% of the powder had a median particle size of about 0.5 micrometers (µm); 50% of the powder had a median particle size of about 1.5 µm; 90% of the powder had a median particle size of about 3.8 µm; and the powder had an oxygen content of about 0.8 wt-%.

The water used in the following examples was filtered through a filtration system to give HPLC-grade water exhibiting a resistance on the order of 18 Mohm.

### EXAMPLES

### Comparative Examples - AlN Powder in Unbuffered Water

AlN powder (7.0 g) was mixed with 30 milliliters (ml) unbuffered water and the mixture was stirred vigorously in an open vessel. The mixture had an initial pH of about 7. The mixture pH increased to over 9.5 after 3 hours of stirring and to about 11 after 21 hours of stirring.

In another comparative example, 7.0 g AlN powder was agitated in 30 ml water for 60 hours. After the agitation, the AlN powder was removed from the water and dried at 120°C for 24 hours. The oxygen content of the dried AlN powder was 26.84 wt-% with a standard deviation of 1.18.

### Example 1

AlN powder (7 g) was added to a mixture of 20 ml of water and 10 ml of a pH 6 buffering agent solution containing 0.025 M monobasic potassium phosphate and 0.025 M dibasic sodium phosphate in water. The AlN/water/buffering agent solution was then vigorously stirred in an open vessel for 48 hours with the pH of the dispersion measured periodically. The pH of the dispersion remained relatively stable over the 48 hours, ending with a pH of about 7. The AlN powder was then removed from the water/buffer solution and dried at 120°C for 24 hours. The oxygen content of the dried powder was 1.117 wt-% with a standard deviation of 0.069. The dried powder was then exposed to 550°C in a nitrogen atmosphere for one hour. The oxygen content of the powder after this exposure was 0.939 wt-% with a 0.066 standard deviation.

### Example 2

AlN powder (70.0 g) was admixed into 300 ml of a 0.07 M monobasic ammonium phosphate/0.01 M dibasic ammonium phosphate solution in water having an ionic strength of 0.10 mol/dm³ and a pH of 5.990 at 21°C. The AlN powder/water/buffering agents mixture was then vigorously stirred in an air atmosphere. After 48 hours of stirring, the mixture exhibited less than a 0.5 pH increase, indicating very little hydrolysis of the AlN powder. The AIN powder was then separated from the liquid medium, dried at 120°C for 72 hours and heat-treated at 550°C in a nitrogen atmosphere for one hour. The oxygen content of the dried and heat-treated powder was measured to be 1.471 wt-% with a standard deviation of 0.122.

### Example 3

This example illustrates that the present invention enables AlN powder to be ball milled in aqueous compositions.

A high density polyethylene bottle was charged with about 200 ml AlN milling media, 65 ml of a solution containing 0.070 M monobasic ammonium phosphate and 0.010 M dibasic ammonium phosphate in water, and 16.0 g AlN powder. After 24 hours of ball milling, the mixture was passed through a 60 mesh (250 µm) screen to remove the milling media. The aqueous medium was decanted from the remaining mixture, and the resulting powder was dried at 120°C for at least 24 hours. The oxygen content of the powder dried at 120°C was 3.310 wt-% with a standard deviation of 0.496. The dried powder was then heat-treated at 550°C in a nitrogen atmosphere for one hour. The oxygen content of the heat-treated powder was 2.555 wt-% with a standard deviation of 0.379.

A comparative experiment was performed in which no water was present in the milling mixture to determine the oxygen content of the resultant AlN powder contributed by the milling media. The oxygen content of AlN powder ball milled in absolute ethanol, dried, and subsequently exposed to 550°C in a nitrogen atmosphere was determined to have an oxygen content of 1.0098 wt-% with a standard deviation of 0.0150.

### Example 4

Example 3 was repeated except, in place of the monobasic/dibasic ammonium phosphate buffer solution, 65 ml of an ethanol/water solution (95 volume % (vol-%) ethanol) was used in which the water was buffered with 1.0 M ammonium acetate and 0.055 M acetic acid. As in the Example 3, the resulting powder was exposed to 550°C in a nitrogen atmosphere. The oxygen content of this powder was 1.228 wt-% with a standard deviation of 0.094.

Comparatively, AlN powder was ball milled for 24 hours in a 95 vol-% ethanol/5 vol-% water solution without including a combination of buffering agents. Upon exposing the resulting AlN powder to 550°C in a nitrogen atmosphere, the oxygen content of the powder was 7.068 wt-% with a standard deviation of 0.248.

### Example 5

15 ml of a solution comprising 0.5 M monobasic ammonium phosphate and 0.165 M dibasic ammonium phosphate in water having an ionic strength of 1.0 mol/dm³ is diluted with 15 ml water. 15 ml of the diluted solution was added to 285 ml of absolute ethanol, resulting in a solution containing 95 vol-% ethanol and 5 vol-% water. AlN powder (70 g) was then added to the ethanol/water solution and stirred for 72 hours. The powder was then separated from the ethanol/water solution, dried at 110-120°C, and heat-treated at 550°C in a nitrogen atmosphere for one hour. The oxygen content of the heat-treated powder was measured to be 1.23 wt-%.

Comparatively, 70 g AlN powder was stirred for 72 hours in 300 ml of a solution containing 95 vol-% ethanol and 5 vol-% water. The powder was then separated from the ethanol/water solution and heat-treated at 550°C for one hour. The oxygen content of the heat-treated powder was measured to be 5.11 wt-%.

### Example 6

AlN powder (70 g) was stirred in 300 ml refluxing water which was buffered with 0.07 M monobasic ammonium phosphate and 0.01 M dibasic ammonium phosphate for 24 hours in an open air atmosphere. After 24 hours of refluxing, the AlN powder was dried at 120°C. The dried powder had a measured oxygen content of 2.187 wt-% with a 0.254 standard deviation. The dried powder was then heat-treated at 550°C in a nitrogen atmosphere for one hour. The heat-treated powder had an oxygen content of 2.665 wt-% with a 0.440 standard deviation.

## Claims

1. A method of processing aluminum nitride powder in water in which the aluminum nitride exhibits a reduced tendency for hydrolysis, the method comprising forming an aqueous admixture that includes (a) a liquid medium containing water, (b) aluminum nitride powder, and (c) a combination of buffering agents that includes a weak acid and a conjugate base of the weak acid and controls pH of the water within a range of from ≥5.5 to ≤7.0, the combination of buffering agents being employed at lower weight percent concentration than that of the aluminum nitride powder, the combination of buffering agents and the liquid medium forming solution.

2. A method as claimed in Claim 1, wherein the aluminum nitride is present in an amount of no more than 60 weight percent and the combination of buffering agents is present in an amount of no more than 30 weight percent, both percentages being based upon admixture weight.

3. A method as claimed in Claim 1, wherein said amount of aluminum nitride is 10 to 30 weight percent, based upon admixture weight.

4. A method as claimed in Claim 2 or Claim 3, wherein said amount of buffering agents is less than 5 weight percent, based upon admixture weight.

5. A method as claimed in Claim 4, wherein said amount of buffering agents is less than 1 weight percent, based upon admixture weight.

6. A method as claimed in any one of the preceding claims, wherein the combination of buffering agents controls pH of the water within a range of from ≥6 to ≤7.

7. A method as claimed in any one of the preceding claims, wherein said liquid medium is water.

8. A method as claimed in any one of the preceding claims, wherein said liquid medium is a mixture of water and a C₁-C₃ alkyl alcohol.

9. A method as claimed in any one of the preceding claims, wherein the combination of buffering agents is selected from
(i) a monobasic phosphate selected from monobasic potassium phosphate, monobasic sodium phosphate, and monobasic ammonium phosphate and a hydroxide selected from potassium hydroxide and sodium hydroxide,
(ii) a monobasic phosphate selected from monobasic potassium phosphate, monobasic sodium phosphate, and monobasic ammonium phosphate and a dibasic phosphate selected from dibasic potassium phosphate, dibasic sodium phosphate, and dibasic ammonium phosphate, and
(iii) acetic acid and an acetate selected from potassium acetate, sodium acetate, and ammonium acetate.

10. A method as claimed in Claim 9, wherein the combination of buffering agents is (i), the monobasic phosphate is employed at a concentration from 0.01 to 2 molarity in the water portion of the liquid medium and the hydroxide is employed at a concentration from 0.01 to 1.0 molarity in the water portion of the liquid medium.

11. A method as claimed in Claim 9, wherein the combination of buffering agents is (ii), the monobasic phosphate is employed at a concentration from 0.01 to 2 molarity in the water portion of the liquid medium and the dibasic phosphate is employed at a concentration from 0.003 to 0.7 molarity in the water portion of the liquid medium.

12. A method as claimed in Claim 9, wherein the combination of buffering agents is (iii), the acetate is employed at a concentration from 0.02 to 2.0 molarity in the water portion of the liquid medium and the acetic acid is employed at a concentration from 0.002 to 1.0 molarity in the water portion of the liquid medium.

13. An aqueous admixture prepared by a method as claimed in any one of Claims 1-12.

14. A method of preparing a dried aluminum nitride powder that, when exposed to a 550-600°C temperature in a nitrogen atmosphere for one hour, has an oxygen content of less than 3 weight percent, which comprises drying an aqueous admixture as claimed in Claim 13.

## Patentansprüche

1. Verfahren zum Behandeln von Aluminiumnitridpulver in Wasser, worin das Aluminiumnitrid eine verringerte Tendenz zur Hydrolyse zeigt, wobei das Verfahren umfaßt Bilden eines wäßrigen Gemisches, das umfaßt (a) ein flüssiges, Wasser enthaltendes Medium, (b) Aluminiumnitridpulver und (c) eine Kombination von Puffersubstanzen, die eine schwache Säure und eine konjugierte Base der schwache Säure umfaßt und den pH des Wassers innerhalb eines Bereichs von ≥ 5,5 bis ≤ 7,0 reguliert, wobei die Kombination von Puffersubstanzen in einer geringeren Gewichtsprozent-Konzentration als die des Aluminiumnitridpulvers eingesetzt wird, wobei die Kombination von Puffersubstanzen und das flüssige Medium eine Lösung bilden.

2. Verfahren nach Anspruch 1, worin das Aluminiumnitrid in einer Menge von nicht mehr als 60 Gew.-% vorliegt und die Kombination von Puffersubstanzen in einer Menge von nicht mehr als 30 Gew.-% vorliegt, wobei beide Prozentangaben auf das Mischungsgewicht bezogen sind.

3. Verfahren nach Anspruch 1, worin die Menge von Aluminiumnitrid 10 bis 30 Gew.-%, bezogen auf das Mischungsgewicht beträgt.

4. Verfahren nach Anspruch 2 oder 3, worin die Menge von Puffersubstanzen weniger als 5 Gew.-%, bezogen auf das Mischungsgewicht beträgt.

5. Verfahren nach Anspruch 4, worin die Menge von Puffersubstanzen weniger als 1 Gew.-%, bezogen auf das Mischungsgewicht beträgt.

6. Verfahren nach einem der vorhergehenden Ansprüche, worin die Kombination von Puffersubstanzen den pH des Wassers innerhalb eines Bereichs von ≥ 6 bis ≤ 7 reguliert.

7. Verfahren nach einem der vorhergehenden Ansprüche, worin das flüssige Medium Wasser ist.

8. Verfahren nach einem der vorhergehenden Ansprüche, worin das flüssige Medium ein Gemisch von Wasser und einem C₁-C₃-Alkylalkohol ist.

9. Verfahren nach einem der vorhergehenden Ansprüche, worin die Kombination von Puffersubstanzen ausgewählt wird aus
(i) einem monobasischen Phosphat, ausgewählt aus monobasischem Kaliumphosphat, monobasischem Natriumphosphat und monobasischem Ammoniumphosphat und einem Hydroxid, ausgewählt aus Kaliumhydroxid und Natriumhydroxid,
(ii) einem monobasischen Phosphat, ausgewählt aus monobasischem Kaliumphosphat, monobasischem Natriumphosphat und monobasischem Ammoniumphosphat und einem dibasischen Phosphat, ausgewählt aus dibasischem Kaliumphosphat, dibasischem Natriumphosphat und dibasischem Ammoniumphosphat und
(iii) Essigsäure und einem Acetat, ausgewählt aus Kaliumacetat, Natriumacetat und Ammoniumacetat.

10. Verfahren nach Anspruch 9, worin die Kombination von Puffersubstanzen (i) ist, wobei das monobasische Phosphat bei einer Konzentration von 0,01 bis 2 Molar in dem Wasseranteil des flüssigen Mediums eingesetzt wird und das Hydroxid bei einer Konzentration von 0,01 bis 1,0 Molar in dem Wasseranteil des flüssigen Mediums eingesetzt wird.

11. Verfahren nach Anspruch 9, worin die Kombination von Puffersubstanzen (ii) ist, wobei das monobasische Phosphat bei einer Konzentration von 0,01 bis 2 Molar in dem Wasseranteil des flüssigen Mediums eingesetzt wird und das dibasische Phosphat bei einer Konzentration von 0,003 bis 0,7 Molar in dem Wasseranteil des flüssigen Mediums eingesetzt wird.

12. Verfahren nach Anspruch 9, worin die Kombination von puffersubstanzen (iii) ist, wobei das Acetat bei einer Konzentration von 0,02 bis 2,0 Molar in dem Wasseranteil des flüssigen Mediums eingesetzt wird und die Essigsäure bei einer Konzentration von 0,002 bis 1,0 Molar in dem Wasseranteil des flüssigen Mediums eingesetzt wird.

13. Wäßriges Gemisch, hergestellt durch ein Verfahren nach einem der Ansprüche 1 bis 12.

14. Verfahren zum Herstellen eines getrockneten Aluminiumnitridpulvers das, wenn es eine Stunde einer Temperatur von 550 bis 600°C in einer Stickstoffatmosphäre ausgesetzt wird, einen sauerstoffgehalt von weniger als 3 Gew.-% aufweist, welches Trocknen eines wäßrigen Gemisches nach Anspruch 13 umfaßt.

## Revendications

1. Procédé de traitement d'une poudre de nitrure d'aluminium dans de l'eau dans lequel le nitrure d'aluminium présente une tendance réduite à l'hydrolyse, le procédé consistant à former un mélange aqueux qui comprend (a) un milieu liquide contenant de l'eau, (b) de la poudre de nitrure d'aluminium, et (c) une combinaison d'agents tampon qui comprend un acide faible et une base conjuguée de l'acide faible et qui ajuste le pH de l'eau entre ≥ 5,5 et ≤ 7,0, la combinaison des agents tampon étant employée à une concentration en pourcentage pondérale inférieure à celle de la poudre de nitrure d'aluminium, la combinaison d'agents tampon et le milieu liquide formant une solution.

2. Procédé selon la revendication 1, dans lequel le nitrure d'aluminium est présent en une quantité ne dépassant pas 60% en poids et la combinaison d'agents tampon est présente en une quantité ne dépassant pas 30% en poids, les deux pourcentages étant rapportés au poids du mélange.

3. Procédé selon la revendication 1, dans lequel ladite quantité de nitrure d'aluminium est comprise entre 10 et 30% en poids, par rapport au poids du mélange.

4. Procédé selon l'une des revendications 2 ou 3, dans lequel ladite quantité d'agents tampon est inférieure à 5% en poids, par rapport au poids du mélange.

5. Procédé selon la revendication 4, dans lequel ladite quantité d'agents tampon est inférieure à 1% en poids, par rapport au poids du mélange.

6. Procédé selon l'une des revendications précédentes, dans lequel la combinaison d'agents tampon ajuste le pH de l'eau dans un intervalle de 6 ≤ pH ≤7.

7. Procédé selon l'une des revendications précédentes, dans lequel ledit milieu liquide est l'eau.

8. Procédé selon l'une des revendications précédentes, dans lequel ledit milieu liquide est un mélange d'eau et d'un alcool alkylique en C₁ à C₃.

9. Procédé selon l'une des revendications précédentes, dans lequel la combinaison d'agents tampon est choisie parmi
(i) un dihydrogénophosphate choisi parmi le dihydrogénophosphate de potassium, le dihydrogénophosphate de sodium, le dihydrogénophosphate d'ammonium et un hydroxyde choisi parmi l'hydroxyde de potassium et l'hydroxyde de sodium,
(ii) un dihydrogénophosphate choisi parmi le dihydrogénophosphate de potassium, le dihydrogénophosphate de sodium, le dihydrogénophosphate d'ammonium et un hydrogénophosphate choisi parmi l'hydrogénophosphate de potassium, l'hydrogénophosphate de sodium, l'hydrogénophosphate d'ammonium, et
(iii) l'acide acétique et un acétate choisi parmi l'acétate de potassium, l'acétate de sodium et l'acétate d'ammonium.

10. Procédé selon la revendication 9, dans lequel la combinaison d'agents tampon est (i), le dihydrogénophosphate est employé à une concentration molaire comprise entre 0,01 et 2,0 M dans la portion aqueuse du milieu liquide et l'hydroxyde est employé à une concentration molaire comprise entre 0,01 et 1,0 M dans la portion aqueuse du milieu liquide.

11. Procédé selon la revendication 9, dans lequel la combinaison d'agents tampon est (ii), le dihydrogénophosphate est employé à une concentration molaire comprise entre 0,01 et 2,0 M dans la portion aqueuse du milieu liquide et le monohydrogénophosphate est employé à une concentration molaire comprise entre 0,003 et 0,7 M dans la portion aqueuse du milieu liquide.

12. Procédé selon la revendication 9, dans lequel la combinaison d'agents tampon est (iii), l'acétate est employé à une concentration molaire comprise entre 0,02 et 2,0 M dans la portion aqueuse du milieu liquide et l'acide acétique est employé à une concentration molaire comprise entre 0,002 et 1,0 M dans la portion aqueuse du milieu liquide.

13. Mélange aqueux préparé à l'aide d'un procédé selon l'une des revendications 1 à 12.

14. Procédé de préparation d'une poudre de nitrure d'aluminium séchée qui, lorsqu'elle est exposée à une température comprise entre 550°C et 600°C dans une atmosphère d'azote pendant une heure, possède une teneur en oxygène de moins de 3 pourcent en poids, qui comprend un séchage d'un mélange aqueux selon la revendication 13.
